# EUROPEAN PATENT SPECIFICATION

(11) **EP 4 113 192 B1**
(45) Date of publication and mention of the grant of the patent: **25.06.2025**
(21) Application number: 20928945.3
(22) Date of filing: 31.03.2020
(51) Int. Cl.: G02B 27/01, G02B 5/02, G02B 26/10, B60K 35/00, G01N 27/04

(54) **HEAD-UP DISPLAY WITH APPARATUS FOR DETECTING SHIFT OF DIFFUSION FILM**
HEAD-UP-ANZEIGE MIT VORRICHTUNG ZUR ERKENNUNG DER VERSCHIEBUNG EINES DIFFUSIONSFILMS
DISPOSITIF D'AFFICHAGE TÊTE HAUTE AVEC APPAREIL PERMETTANT DE DÉTECTER UN DÉCALAGE DE FILM DE DIFFUSION

(43) Date of publication of application: 04.01.2023
(73) Proprietor: Shenzhen Yinwang Intelligent Technologies Co., Ltd., Shenzhen, Guangdong 518129 (CN)
(72) Inventor: WENG, Der Cheng, Shenzhen, Guangdong 518129 (CN)
(74) Representative: Pfenning, Meinig & Partner mbB
(86) International application number: PCT/CN2020/082572
(87) International publication number: WO 2021/196017

(56) References cited:
- WO-A1-2020/059420
- CN-A- 101 334 530
- CN-A- 101 958 110
- CN-A- 102 466 882
- CN-A- 107 636 508
- CN-A- 107 870 186
- CN-A- 109 031 676
- CN-A- 109 543 515
- CN-A- 110 741 305
- GB-A- 2 554 575
- US-A1- 2010 053 604
- US-A1- 2015 009 550
- US-A1- 2017 353 004
- US-A1- 2019 033 585
- US-A1- 2019 131 767
- US-A1- 2019 285 885
- US-A1- 2019 376 666
- US-A1- 2020 055 395
- US-A1- 2021 328 404

## Description

### TECHNICAL FIELD

Embodiments of this application relate to the field of optical technologies, and in particular, to a head-up display and a control method for the head-up display.

### BACKGROUND

Document US 2017/353004 A1 discloses a Vertical Cavity Surface Emitting Lasers (VCSEL) illuminator module.

Document WO 2020/059420 A1 discloses a light source driving device that emits laser light and a light emitting device.

Document US 2019/131767 A1 discloses a beam projector module.

Document US 2019/376666 A1 discloses a housing for a light source mounted on a substrate.

Document US 2015/009550 A1 discloses a laser scanning projection display and a method for controlling the same.

Document US 2020/055395 A1 discloses a virtual image display optical system.

Document CN 109 543 515 A discloses an optical component, a monitoring system and method thereof, an active lighting module, and a terminal.

As vehicles continuously increase, driving pressure on roads becomes increasingly higher. In addition, when driving, a driver often needs to lower the head to check a mobile phone or a dashboard, which inevitably increases a risk during driving. Therefore, an in-vehicle head-up display emerges accordingly.

A working principle of the in-vehicle head-up display is generally as follows: A laser light source emits laser light, and then a micro-electro-mechanical system scans the laser light onto a diffuser film. In this case, the diffuser film may be considered as an area light, and light emitted from the diffuser film finally projects into a windshield, so as to form a virtual image on a side of the windshield outside the vehicle. The virtual image may be used to display information on a device such as a dashboard or a mobile phone, so as to avoid an accident because the driver lowers the head to check the mobile phone or the dashboard.

However, due to a position shift of the diffuser film, the laser light scanned by the micro-electro-mechanical system may be directly emitted at the windshield, and finally emitted into eyes of the driver, thereby causing harm.

Therefore, it is necessary to detect the shift of the diffuser film in time to prevent the driver from being harmed.

### SUMMARY

The invention is defined in the appended claims.

Embodiments of this application provide a head-up display and a control method for the head-up display according to the independent claims, to detect the shift of the diffuser film.

A first example provides an apparatus for detecting a shift of a diffuser film, including a power supply, a conductive module, and a detection module; and
a relatively fixed position relationship exists between the conductive module and the diffuser film.

When the diffuser film is in a first position, the conductive module is connected to the power supply to form a closed loop.

When the diffuser film is shifted from the first position to a second position, a position of the conductive module changes to make the closed loop open, where the second position may have a plurality of options.

A shift distance from the second position to the first position is greater than a preset distance, and the preset distance may be set based on an actual situation, for example, may be determined based on a size of the conductive module and a related position relationship between the conductive module and the diffuser film.

The detection module is configured to detect whether the closed loop is opened, and when the closed loop is opened, it may be determined that the diffuser film is shifted.

In this example, when the diffuser film is in the first position, the conductive module is connected to the power supply to form a closed loop. When the diffuser film is shifted from the first position to the second position, the closed loop is opened. Based on that the detection module detects that the closed loop is opened, it may be determined that the diffuser film is shifted, so as to remind a user in time.

Further, the diffuser film is fastened to a bearer module, the bearer module may have a plurality of structures, and the diffuser film may also be fastened to the bearer module in a plurality of manners.

The conductive module is connected to the bearer module, and the conductive module may also be connected to the bearer module in a plurality of manners. For example, the conductive module may be pasted to the bearer module, or may be fastened to the bearer module by using a fastening component such as a screw.

This example provides a feasible solution for forming a relatively fixed position relationship, that is, the conductive module is connected to the diffuser film by using the bearer module.

Further, the bearer module includes a first frame.

The diffuser film is in the first frame, and the diffuser film may be adhered to the first frame by using a double-sided tape.

The conductive module is fastened to the first frame, and there are a plurality of fastening manners. For example, the conductive module may be fastened to the first frame by using a screw.

This example provides a feasible solution for connecting the diffuser film to the bearer module. Specifically, the bearer module includes the first frame, and the diffuser film may be adhered to the first frame.

Additionally, the bearer module further includes a foot. The foot may have a plurality of structures, and there may be a plurality of feet.

The foot is connected to the first frame, and is configured to support the first frame.

The conductive module is disposed below the foot and connected to the foot.

This example provides a feasible solution for connecting the conductive module to the first frame, that is, the conductive module is connected to the foot supporting the first frame.

In an alternative implementation, which is not an embodiment of the present invention but helpful for understanding certain aspects thereof, the bearer module includes a second frame and a third frame, and the conductive module includes a screw.

A first through hole is disposed in the second frame, and a second through hole is disposed in the third frame.

The screw fastens the second frame and the third frame by using the first through hole and the second through hole.

The diffuser film is fastened between the second frame and the third frame.

This implementation provides another structure of the bearer module, that is, the bearer module includes the second frame and the third frame that are connected to each other. Based on this structure, the conductive module is a screw for fastening the second frame and the third frame.

Based on the first example, the detection module may include a first resistor, a second resistor, a detection submodule, a first connection end, and a second connection end.

A power supply end of the power supply is connected to a first end of the first resistor.

A first end of the second resistor is connected to a second end of the first resistor, and a second end of the second resistor is grounded.

The first connection end is connected to the second end of the first resistor, and the second connection end is grounded.

When the diffuser film is in the first position, a first end of the conductive module is connected to the first connection end, and a second end of the conductive module is connected to the second connection end.

When the diffuser film is shifted from the first position to the second position, the first end of the conductive module is disconnected from the first connection end, and/or the second end of the conductive module is disconnected from the second connection end.

The detection submodule is connected to the second end of the first resistor, and is configured to detect a voltage of the second end of the first resistor, so as to determine that the closed loop is opened.

This example provides a feasible solution of the detection module, that is, determining, by detecting a voltage at a point in the closed loop, that the closed loop is opened.

A second aspect of embodiments of this application provides a head-up display, including a laser light source, a micro-electro-mechanical system, a diffuser film, and an apparatus for detecting a shift of the diffuser film. the apparatus comprises a power supply, a conductive module, and a detection module; a relatively fixed position relationship exists between the conductive module and the diffuser film; when the diffuser film is in a first position, the conductive module is connected to the power supply to form a closed loop; when the diffuser film is shifted from the first position to a second position, a position of the conductive module changes to make the closed loop open; a shift distance from the second position to the first position is greater than a preset distance; the detection module is configured to detect that the closed loop is opened; the diffuser film is fastened to a bearer module; the conductive module is connected to the bearer module; the bearer module comprises a first frame; the diffuser film is in the first frame, and the diffuser film is adhered to the first frame; the conductive module is fastened to the first frame; the bearer module further comprises a foot; the foot is connected to the first frame, and is configured to support the first frame; the conductive module is disposed below the foot and connected to the foot.

When the diffuser film is in the first position, laser light emitted by the laser light source is scanned by the micro-electro-mechanical system and incident on the diffuser film.

When the diffuser film is in the second position, the diffuser film deviates from an optical path of the laser light scanned by the micro-electro-mechanical system, so that the laser light emitted by the laser light source cannot be incident on the diffuser film after being scanned by the micro-electro-mechanical system.

In this embodiment of this application, when the diffuser film is in the first position, the laser light emitted by the laser light source is scanned by the micro-electro-mechanical system and incident on the diffuser film, and a conductive module is connected to a power supply to form a closed loop. When the diffuser film is shifted from the first position to the second position, the diffuser film deviates from the optical path of the laser light scanned by the micro-electro-mechanical system, so that the laser light emitted by the laser light source cannot be incident on the diffuser film after being scanned by the micro-electro-mechanical system, and the closed loop is opened. Therefore, based on that a detection module detects that the closed loop is opened, it may be determined that the diffuser film is shifted, so as to remind a user in time.

Based on the second aspect, embodiments of this application provide a first implementation of the second aspect, and the head-up display further includes a bearer module.

The diffuser film is fastened to the bearer module.

This embodiment of this application provides a feasible solution for fastening the diffuser film in the head-up display.

Based on the second aspect or the first implementation of the second aspect, embodiments of this application provide a second implementation of the second aspect, and the head-up display further includes a control module.

The control module may be connected to the detection module and the laser light source, and is configured to control the laser light source to be turned off when it is detected that the closed loop is opened.

In this embodiment of this application, the control module controls the laser light source to be turned off when it is detected that the closed loop is opened, so as to prevent the laser light emitted by the laser light source from being directly emitted into eyes of a driver without passing through the diffuser film.

A third aspect of embodiments of this application provides a control method for the head-up display according to any one of the implementations of the second aspect of embodiments of this application, including:
controlling a laser light source in the head-up display to be turned off based on detection of a closed loop being opened; and
controlling the laser light source in the head-up display to be turned on based on detection of the closed loop being closed.

In this embodiment of this application, when the closed loop is opened, a control module controls the laser light source in the head-up display to be turned off, so as to prevent laser light emitted by the laser light source from being directly emitted into eyes of a driver without passing through a diffuser film. When the closed loop is closed, the control module controls the laser light source in the head-up display to be turned on to ensure normal use of the head-up display.

In the technical solutions provided in embodiments of this application, the conductive module has a relatively fixed position relationship with the diffuser film. When the diffuser film is in the first position, the conductive module is connected to the power supply to form a closed loop. When the diffuser film is shifted from the first position to the second position, the closed loop is opened. Based on that the detection module detects that the closed loop is opened, it may be determined that the diffuser film is shifted, so as to remind the user in time.

### BRIEF DESCRIPTION OF DRAWINGS

FIG. 1 is a schematic architecture diagram of an imaging system according to an embodiment of this application;
FIG. 2 is a schematic diagram of a structure of a diffuser film according to an embodiment of this application;
FIG. 3 is a schematic diagram of a first embodiment of an apparatus for detecting a shift of a diffuser film according to an embodiment of this application;
FIG. 4 is a schematic diagram of an embodiment of a bearer module according to an embodiment of this application;
FIG. 5 is a schematic diagram of a second embodiment of an apparatus for detecting a shift of a diffuser film according to an embodiment of this application;
FIG. 6 is a schematic diagram of a third embodiment of an apparatus for detecting a shift of a diffuser film according to an embodiment of this application;
FIG. 7 is a schematic diagram of a fourth embodiment of an apparatus for detecting a shift of a diffuser film according to an embodiment of this application;
FIG. 8 is a schematic diagram of a fifth embodiment of an apparatus for detecting a shift of a diffuser film; the fifth embodiment is not an embodiment of the present invention but helpful for understanding certain aspects thereof.
FIG. 9 is a schematic diagram of a sixth embodiment of an apparatus for detecting a shift of a diffuser film; the sixth embodiment is not an embodiment of the present invention but helpful for understanding certain aspects thereof.
FIG. 10 is a schematic diagram of a first embodiment of a detection module according to an embodiment of this application;
FIG. 11 is a schematic diagram of a second embodiment of a detection module according to an embodiment of this application;
FIG. 12 is a schematic diagram of a seventh embodiment of an apparatus for detecting a shift of a diffuser film according to an embodiment of this application;
FIG. 13 is a schematic diagram of a first embodiment of a head-up display according to an embodiment of this application;
FIG. 14 is a schematic diagram of a second embodiment of a head-up display according to an embodiment of this application;
FIG. 15 is a schematic diagram of a third embodiment of a head-up display according to an embodiment of this application; and
FIG. 16 is a schematic diagram of an embodiment of a control method for a head-up display according to an embodiment of this application.

### DESCRIPTION OF EMBODIMENTS

The following describes technical solutions in embodiments of this application with reference to the accompanying drawings in embodiments of this application.

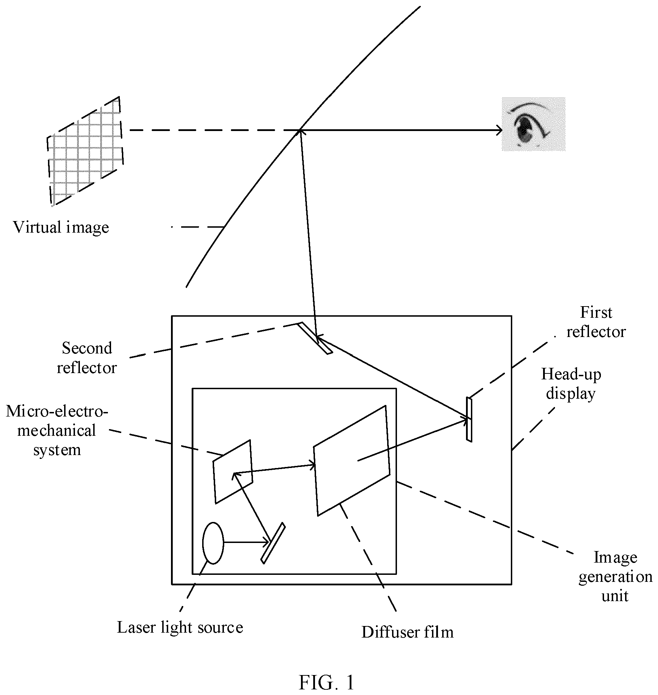

Embodiments of this application may be applied to an imaging system shown in FIG. 1. The imaging system mainly includes a head-up display (Head Up Display, HUD) and a windshield (Windshield). The head-up display is configured to project light to the windshield to generate a virtual image on a side of the windshield outside a vehicle. The virtual image may be used to display various information, for example, may be used to display information on a device such as a dashboard or a mobile phone.

Specifically, the head-up display includes an image generation unit and an optical mirror group. Optionally, a lens is disposed on an outer wall of the image generation unit, and the lens is located on an optical path of light emitted from the image generation unit.

The image generation unit includes a laser light source, a micro-electro-mechanical system (MEMS, Micro Electro Mechanical System), and a diffuser film. The laser light source emits laser light, and then the micro-electro-mechanical system scans the laser light onto the diffuser film. Finally, the laser light passes through the diffuser film and projects to the windshield under an action of the optical mirror group.

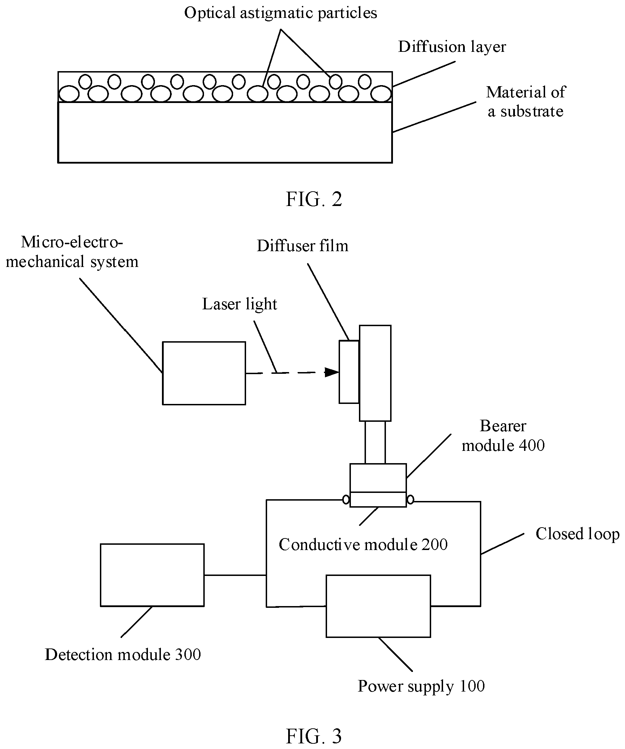

A structure of the diffuser film may be shown in FIG. 2, including a substrate with light transmittance and a diffusion layer disposed on a surface of the substrate. A material of the substrate may be polyethylene terephthalate (Polyethylene terephthalate, PET). The diffusion layer includes optical astigmatic particles.

Based on a function of the diffusion layer, the laser light is reflected, refracted, or scattered when passing through the diffuser film, and becomes uniform and gentle and does not harm eyes. Therefore, the diffuser film may also be considered as an area light.

In the imaging system shown in FIG. 1, the optical mirror group includes a first reflector and a second reflector. Light emitted from the diffuser film is sequentially reflected by the first reflector and the second reflector, and finally projected onto the windshield.

An arrow in FIG. 1 represents a direction of propagation of light.

It should be understood that, because laser light has a large energy, to prevent the laser light from being emitted into eyes of a driver and causing harm, the diffuser film should be disposed in a proper position, so that the laser light passes through the diffuser film and then is emitted at the optical mirror group rather than being directly emitted at the optical mirror group. However, during use of the head-up display, the diffuser film may be shifted, causing the laser light to be directly emitted at the optical mirror group without passing through the diffuser film, and finally emitted into the eyes of the driver. In addition, because the head-up display is applied to a vehicle, impact and vibration may occur on the vehicle during driving, and the diffuser film is more prone to shift.

Therefore, an embodiment of this application provides an apparatus for detecting a shift of a diffuser film. The apparatus may be integrated into a same device as the diffuser film. For example, the apparatus may be integrated into a head-up display, and the apparatus may be directly or indirectly connected to the diffuser film, to detect that the diffuser film is shifted, so as to remind a user that the diffuser film is shifted, thereby avoiding causing harm.

Specifically, FIG. 3 is a schematic diagram of a first embodiment of an apparatus for detecting a shift of a diffuser film according to an embodiment of this application. This embodiment of this application provides an embodiment of an apparatus for detecting a shift of a diffuser film, including a power supply 100, a conductive module 200, and a detection module 300.

An output voltage of the power supply 100 may be selected based on an actual requirement.

The conductive module 200 has a relatively fixed position relationship with the diffuser film. There may be one or more conductive modules 200, and the conductive module 200 may have a plurality of structures. This is not limited in this embodiment of this application, for example, the conductive module 200 may be a conductive spring.

The relatively fixed position relationship may be formed in a plurality of manners, which is not limited in this embodiment of this application.

For example, the conductive module 200 may be connected to the diffuser film, so as to form a relatively fixed position relationship, where the connection may be a direct connection, or may be an indirect connection. The conductive module 200 may alternatively not be connected to the diffuser film, but has a relatively fixed position relationship with the diffuser film.

The following describes a manner in which the conductive module 200 is indirectly connected to the diffuser film. FIG. 3 is used as an example, and the diffuser film is fastened to a bearer module 400. The conductive module 200 is connected to the bearer module 400.

The bearer module 400 may have a plurality of structures, which is not limited in this embodiment of this application.

The diffuser film may be fastened to the bearer module 400 in a plurality of manners, and the manners may be related to the structures of the bearer module 400. This is not limited in this embodiment of this application.

The conductive module 200 may be connected to the bearer module 400 in a plurality of manners. For example, the conductive module 200 may be pasted to the bearer module 400, or may be fastened to the bearer module 400 by using a fastening component such as a screw. This is not limited in this embodiment of this application.

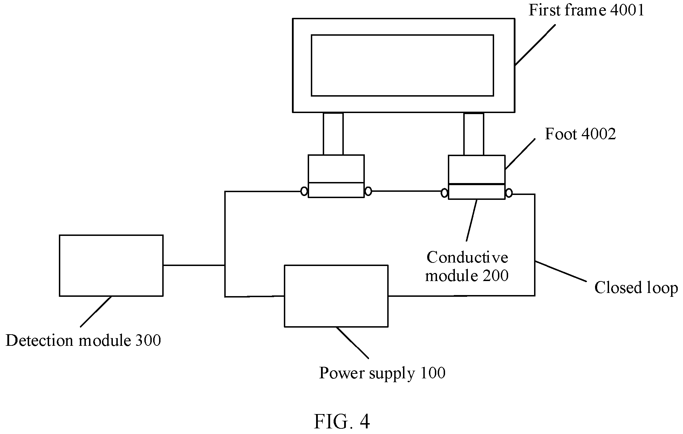

With reference to FIG. 3 and FIG. 4, the following describes the structure of the bearer module 400, a manner of fastening the diffuser film, and a manner of connecting the conductive module 200 to the bearer module 400.

As shown in FIG. 1 and FIG. 4, for example, the bearer module 400 includes a first frame 4001.

The diffuser film is in the first frame 4001, and the diffuser film is adhered to the first frame 4001.

It should be noted that the diffuser film may be adhered to the first frame 4001 in a plurality of manners. For example, a double-sided tape may be disposed around the diffuser film, and the diffuser film is adhered to the first frame 4001 by using the double-sided tape. FIG. 4 does not show the diffuser film.

The conductive module 200 is fastened to the first frame 4001, and the conductive module 200 is fastened to the first frame 4001 in a plurality of manners. For example, the conductive module 200 may be directly fastened to the first frame 4001, or may be indirectly fastened to the first frame 4001.

As shown in FIG. 3 and FIG. 4, as an implementable manner in which the conductive module 200 is indirectly fastened to the first frame 4001, the bearer module 400 further includes a foot 4002.

The foot 4002 is connected to the first frame 4001, and is configured to support the first frame 4001.

The conductive module 200 is disposed below the foot 4002 and connected to the foot 4002.

It should be noted that there may be one or more feet 4002. When there are a plurality of feet 4002, one conductive module 200 may be disposed below each foot 4002.

Based on the foregoing relatively fixed position relationship, when the diffuser film is in a first position, laser light passes through the diffuser film, and the conductive module 200 is connected to the power supply 100 to form a closed loop.

It may be learned from the foregoing description that there may be a plurality of conductive modules 200. It is assumed that there are two conductive modules 200, and the two conductive modules 200 may be connected in series in a same closed loop, or may be separately connected in different loops. For example, as shown in FIG. 4, the bearer module 400 includes two feet 4002, one conductive module 200 is disposed below each foot 4002, and the two conductive modules 200 form a closed loop in series with the power supply 100. The two conductive modules 200 may alternatively be connected in parallel, so as to form two closed loops with the power supply 100.

When the diffuser film is shifted from the first position to a second position, the laser light does not pass through the diffuser film, and a position of the conductive module 200 changes to make the closed loop open, where a shift distance from the second position to the first position is greater than a preset distance.

It should be noted that the second position may have a plurality of cases. This is not limited in this embodiment of this application. The following provides specific description with reference to FIG. 3, FIG. 5, and FIG. 6. Herein, it is first assumed that the position of the diffuser film in FIG. 3 is the first position.

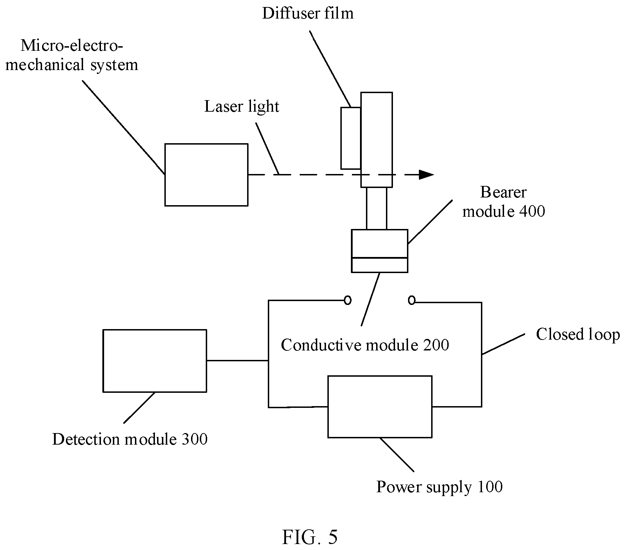

The diffuser film may be shifted longitudinally from the first position to the second position. Specifically, as shown in FIG. 5, the diffuser film is shifted upward from the first position to the second position, that is, the position of the diffuser film in FIG. 5 is the second position. The conductive module 200 is also shifted upward with the diffuser film, and both ends of the conductive module 200 are disconnected from the power supply 100, so that the closed loop is opened.

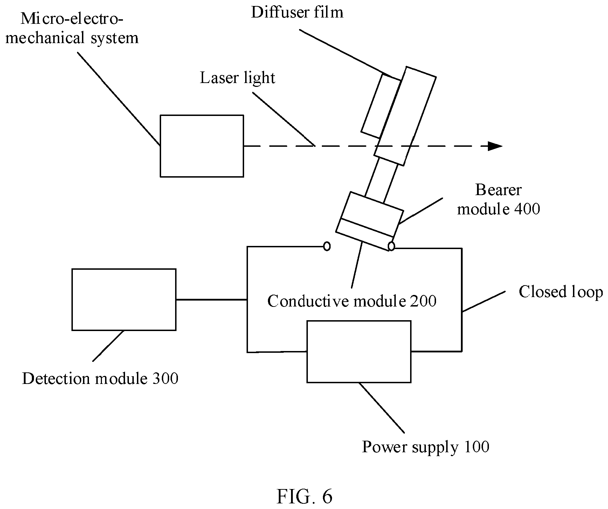

The diffuser film may be shifted obliquely from the first position to the second position. Specifically, as shown in FIG. 6, the diffuser film is shifted obliquely from the first position to one side to the second position, that is, the position of the diffuser film in FIG. 6 is the second position. The conductive module 200 is also shifted obliquely to one side with the diffuser film, and one end of the conductive module 200 is disconnected from the power supply 100, so that the closed loop is opened.

In addition, the diffuser film may alternatively be shifted laterally from the first position to the second position, so that the conductive module 200 is also shifted laterally. Both ends of the conductive module 200 are disconnected from the power supply 100, so that the closed loop is opened.

Therefore, in this embodiment of this application, the second position may have a plurality of cases, specifically including any position at which the closed loop can be opened.

It should be noted that the diffuser film is inevitably shifted during use, especially when the diffuser film is applied to a head-up display of a vehicle, the diffuser film is frequently shifted as the vehicle vibrates. Therefore, to prevent a slight shift of the diffuser film from causing the closed loop to be opened, in this embodiment of this application, the position of the conductive module 200 is properly disposed, so that only when the shift distance of the diffuser film is greater than the preset distance, the closed loop can be opened.

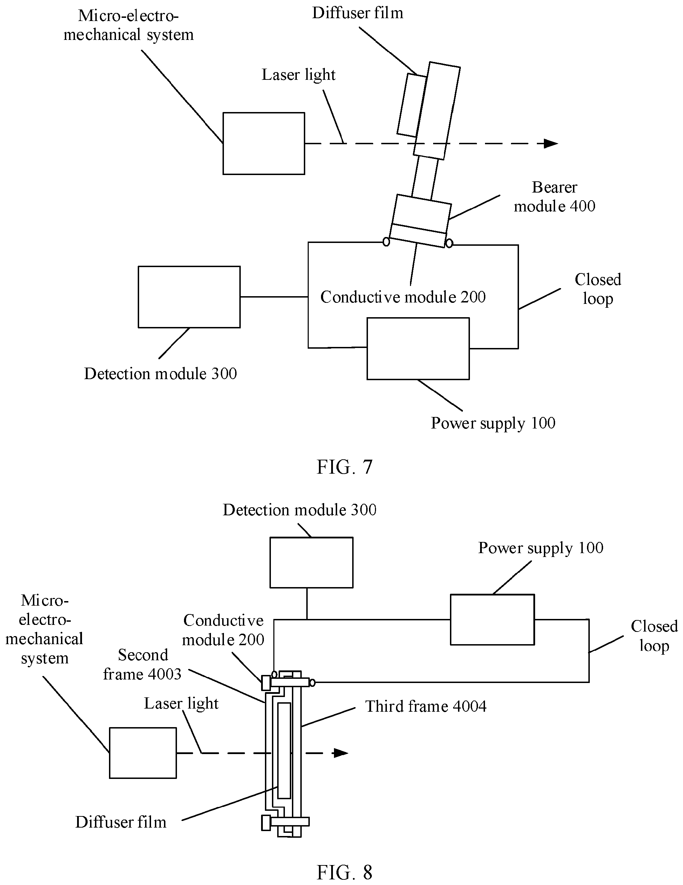

For ease of understanding, it may be learned from comparison between FIG. 3 and FIG. 7 that the diffuser film is shifted obliquely to one side from the first position shown in FIG. 3. However, because the conductive module 200 has a specific thickness, both ends of the conductive module 200 are not disconnected from the power supply 100. Through comparison between FIG. 6 and FIG. 7, it may be learned that the diffuser film continues to be shifted on the basis of the position shown in FIG. 7, and eventually is shifted to the second position shown in FIG. 6. In this case, one end of the conductive module 200 is disconnected from the power supply 100.

The preset distance may be determined based on a size of the conductive module 200 and a related position relationship between the conductive module 200 and the diffuser film. A specific determining method is not described in detail herein.

The detection module 300 is configured to detect whether the closed loop is opened. It may be understood that the detection module 300 may be connected to the closed loop, so as to detect that the closed loop is opened.

It should be noted that the detection module 300 may have a plurality of structures, which is not limited in this embodiment of this application. For example, the detection module 300 may be an ammeter connected in series in the closed loop.

In this embodiment of this application, when the diffuser film is in the first position, the conductive module 200 is connected to the power supply 100 to form a closed loop. When the diffuser film is shifted from the first position to the second position, the closed loop is opened. Based on that the detection module 300 detects that the closed loop is opened, it may be determined that the diffuser film is shifted, so as to remind a user in time.

It may be learned from FIG. 4 and related descriptions in FIG. 4 that the bearer module 400 includes the first frame 4001 and the foot 4002. Correspondingly, the diffuser film may be adhered to the bearer module 400, and the conductive module 200 may be disposed below the foot 4002. In addition, the bearer module 400 may have a plurality of structures. Correspondingly, there may be also a plurality of optional manners of connecting the diffuser film to the bearer module 400, structures of the conductive module 200, and manners of connecting the conductive module 200 to the bearer module 400.

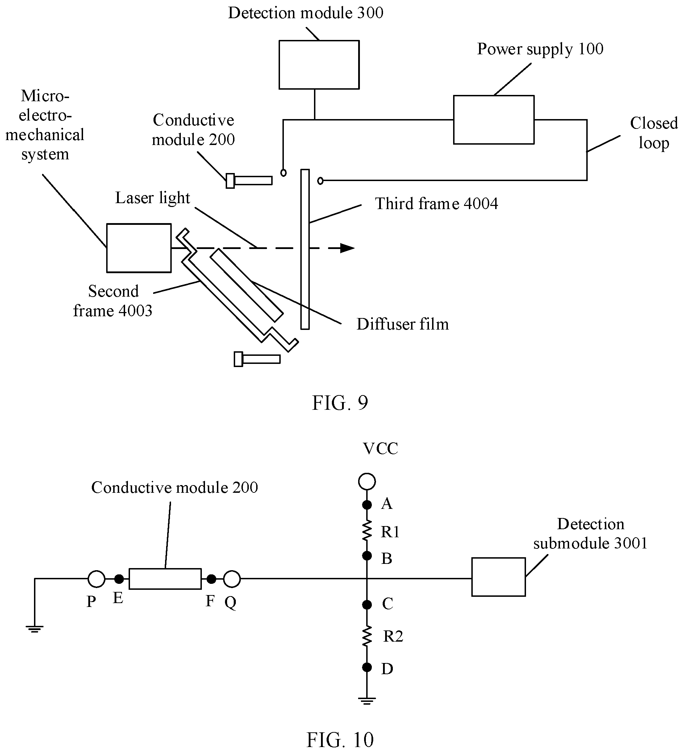

The following describes another embodiment, which is not an embodiment of the present invention but helpful for understanding certain aspects thereof, with reference to FIG. 8 and FIG. 9. In this embodiment, a structure of the bearer module 400, a manner of connecting the diffuser film to the bearer module 400, a structure of the conductive module 200, and a manner of connecting the conductive module 200 to the bearer module 400 are different from those shown in FIG. 4. Specifically, as shown in FIG. 8, in another embodiment of the apparatus for detecting a shift of a diffuser film provided in this embodiment of this application, the bearer module 400 includes a second frame 4003 and a third frame 4004, and the conductive module 200 includes a screw.

The second frame 4003 and the third frame 4004 may have a plurality of structures. This is not limited in this embodiment of this application. FIG. 8 shows only one structure of each of the second frame 4003 and the third frame 4004.

A first through hole is disposed in the second frame 4003, and a second through hole is disposed in the third frame 4004. FIG. 8 does not show the first through hole and the second through hole.

The screw fastens the second frame 4003 and the third frame 4004 by sequentially using the first through hole and the second through hole.

The diffuser film is fastened between the second frame 4003 and the third frame 4004.

In this embodiment of this application, the screw not only functions to fasten the second frame 4003 and the third frame 4004, but also functions as the conductive module 200.

Specifically, as shown in FIG. 8, the diffuser film is in the first position, and two ends of the screw are separately connected to the power supply 100 to form a closed loop.

Based on loosening of the screw, the screw falls off from the first through hole and the second through hole, the second frame 4003 and the third frame 4004 are separated, and the diffuser film cannot be fastened to the first position, so that the diffuser film is shifted. FIG. 9 is used as an example. It is assumed that the diffuser film is shifted to a position shown in FIG. 9, that is, the second position, connections between the two ends of the screw and two ends of the power supply 100 are disconnected, so that the closed loop is opened.

In this embodiment of this application, the conductive module 200 is a screw, the diffuser film is shifted from the first position to the second position based on falling off of the screw, and the closed loop between the screw and the power supply 100 is opened. Therefore, in this embodiment of this application, by detecting that the closed loop is opened, it is determined that the diffuser film is shifted.

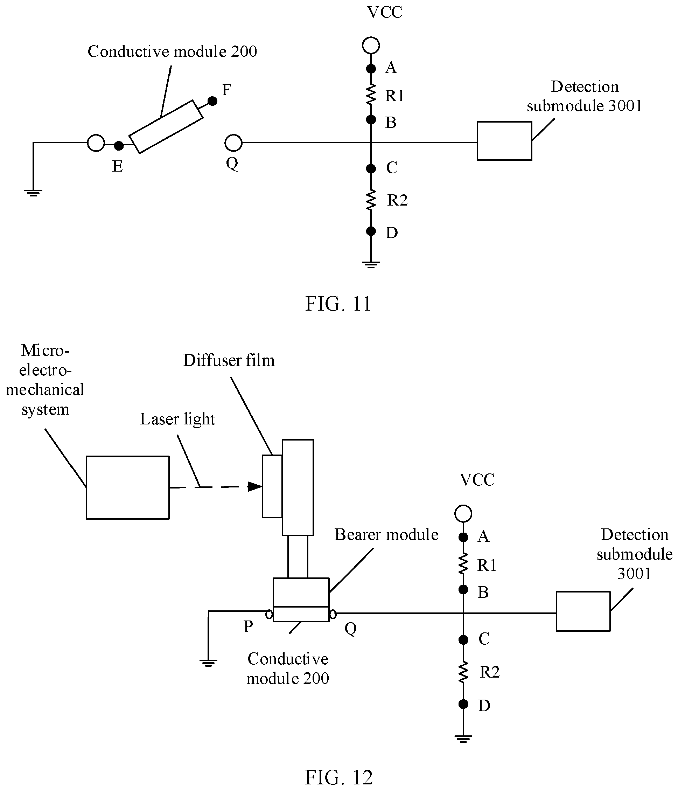

It may be learned from the foregoing description that the detection module 300 may have a plurality of structures. The following specifically describes a structure of the detection module with reference to FIG. 10 and FIG. 11. As shown in FIG. 10, the detection module 300 includes a first resistor R1, a second resistor R2, a detection submodule 3001, a first connection end Q, and a second connection end P.

A power supply end VCC of the power supply is connected to a first end A of the first resistor R1.

A first end C of the second resistor R2 is connected to a second end B of the first resistor R1, and a second end D of the second resistor R2 is grounded.

The first connection end Q is connected to the second end B of the first resistor R1, and the second connection end P is grounded.

As shown in FIG. 10, when the diffuser film is in the first position shown in FIG. 10, a first end F of the conductive module 200 is connected to the first connection end Q, and a second end E of the conductive module 200 is connected to the second connection end P, so that the conductive module 200 is connected to the power supply to form a closed loop.

As shown in FIG. 11, when the diffuser film is shifted from the first position to the second position shown in FIG. 11, the first end F of the conductive module 200 is disconnected from the first connection end Q, and/or the second end E of the conductive module 200 is disconnected from the second connection end P, so that the closed loop between the conductive module 200 and the power supply is opened. FIG. 10 shows only a case in which the first end F of the conductive module 200 is disconnected from the first connection end Q.

The detection submodule 3001 is connected to the second end B of the first resistor R1, and is configured to detect a voltage of the second end B of the first resistor R1, so as to determine that the closed loop is opened.

It may be understood that when the first end F of the conductive module 200 is connected to the first connection end Q and the second end E of the conductive module 200 is connected to the second connection end P, the conductive module 200 is connected to the second resistor R2 in parallel. It is assumed that in this case, a voltage detected by the detection submodule 3001 is a first voltage. When the first end F of the conductive module 200 is disconnected from the first connection end Q, and/or the second end E of the conductive module 200 is disconnected from the second connection end P, a branch on which the conductive module 200 is located is disconnected. It is assumed that in this case, a voltage detected by the detection submodule 3001 is a second voltage.

It may be learned from circuit theory that the first voltage is lower than the second voltage. Therefore, if the detection submodule 3001 detects a low voltage, it may be determined that the closed circuit is not opened. If the detection submodule 3001 detects a high voltage, it may be determined that the closed loop is opened.

Based on the structure of the detection module shown in FIG. 10 and FIG. 11, the apparatus for detecting a shift of a diffuser film shown in FIG. 3 may be shown in FIG. 12.

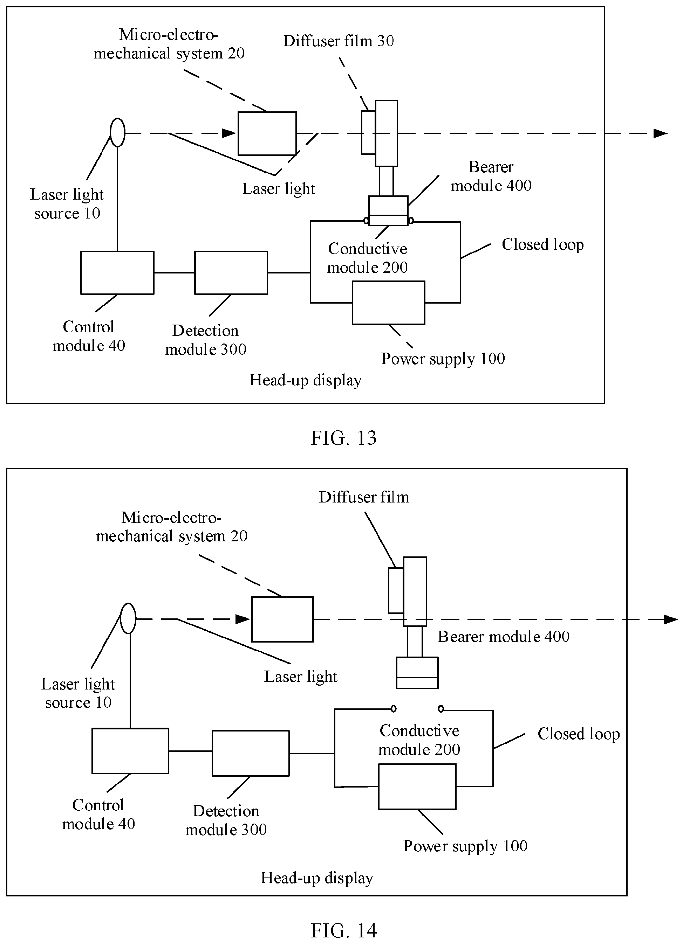

FIG. 13 is a schematic diagram of a first embodiment of a head-up display according to an embodiment of this application. This embodiment of this application provides an embodiment of a head-up display, including a laser light source 10, a micro-electro-mechanical system 20, a diffuser film 30, and the apparatus for detecting a shift of a diffuser film mentioned in any one of the foregoing embodiments.

When the diffuser film 30 is in a first position, laser light emitted by the laser light source 10 is scanned by the micro-electro-mechanical system 20, then incident on the diffuser film 30, passes through the diffuser film 30, and finally exits the head-up display.

FIG. 14 is a schematic diagram of a second embodiment of a head-up display according to an embodiment of this application. As shown in FIG. 14, the diffuser film 30 is in a second position, and the diffuser film 30 deviates from an optical path of the laser light scanned by the micro-electro-mechanical system 20, that is, the laser light directly exits the head-up display without passing through the diffuser film 30.

It should be noted that FIG. 13 and FIG. 14 show only one structure of the apparatus for detecting a shift of a diffuser film, and FIG. 14 shows only one case in which the diffuser film 30 is in the second position. Based on the foregoing embodiments, the apparatus for detecting a shift of a diffuser film is described in detail. This embodiment of this application is not described in detail herein. For details, refer to the apparatus for detecting a shift of a diffuser film described in FIG. 2 to FIG. 12.

In this embodiment of this application, when the diffuser film 30 is in the first position, the laser light emitted by the laser light source 10 is scanned by the micro-electro-mechanical system 20 and incident on the diffuser film 30, and the conductive module 200 is connected to the power supply 100 to form a closed loop. When the diffuser film 30 is shifted from the first position to the second position, the diffuser film 30 deviates from the optical path of the laser light scanned by the micro-electro-mechanical system 20, that is, the laser light directly exits the head-up display without passing through the diffuser film 30, and the closed loop is opened. Therefore, if the detection module 300 detects that the closed loop is opened, it may be determined that the diffuser film 30 is shifted, so as to remind the user in time.

Based on the foregoing embodiments, as can be learned from FIG. 13 and FIG. 14, in another embodiment of the head-up display provided in this embodiment of this application, the head-up display further includes a bearer module 400.

The diffuser film 30 is fastened to the bearer module 400.

Based on the foregoing embodiments, as can be learned from FIG. 13 and FIG. 14, in another embodiment of the head-up display provided in this embodiment of this application, the head-up display further includes a control module 40.

The control module 40 is configured to control the laser light source 10 to be turned off when it is detected that the closed loop is opened.

The control module 40 may be connected to the detection module 300 to obtain a detection result of the detection module 300. The control module may be further connected to the laser light source 10, and is configured to control the laser light source 10 to be turned on or turned off.

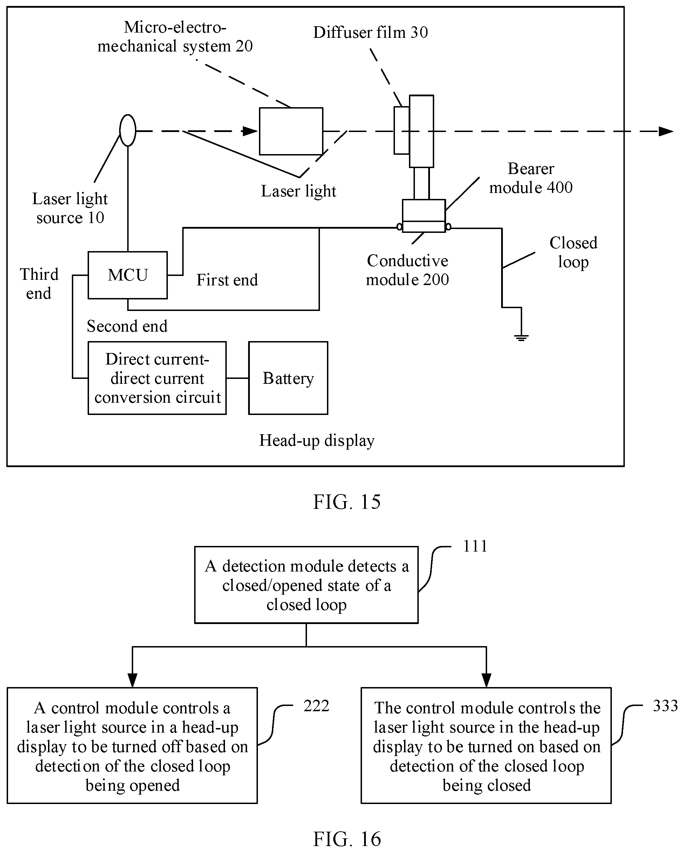

It should be noted that the control module 40 and the detection module 300 may be integrated into one module. For example, referring to FIG. 15, the control module 40 and the detection module 300 may be integrated into a micro control unit (Micro Control Unit, MCU). In this case, the power supply 100 in the apparatus for detecting a shift of a diffuser film may also be integrated into the MCU.

Specifically, a first end of the MCU serves as an output end of the power supply 100 (for example, the power supply end VCC in FIG. 10), and is configured to supply power. A second end of the MCU is connected to a closed loop (for example, the second end B of the first resistor R1 in FIG. 10), and is configured to detect that the closed loop is opened. A third end of the MCU is connected to the laser light source 10, and is configured to control the laser light source 10 to be turned on or off. The MCU may be connected to a battery by using a direct current-direct current conversion circuit.

In this embodiment of this application, when the closed loop is opened, the control module 40 controls the laser light source 10 in the head-up display to be turned off, so as to prevent laser light emitted by the laser light source 10 from being directly emitted into eyes of a driver without passing through the diffuser film 30. When the closed loop is closed, the control module 40 controls the laser light source 10 in the head-up display to be turned on to ensure normal use of the head-up display.

Referring to FIG. 16, an embodiment of this application further provides a control method for the head-up display described in FIG. 13 to FIG. 15, including:
Step 111: A detection module detects a closed/opened state of a closed loop, where the closed loop is the closed loop mentioned in FIG. 13 to FIG. 15.
Step 222: The control module controls a laser light source in the head-up display to be turned off based on detection of the closed loop being opened.
Step 333: The control module controls the laser light source in the head-up display to be turned on based on detection of the closed loop being closed.

In this embodiment of this application, when the closed loop is opened, the control module controls the laser light source in the head-up display to be turned off, so as to prevent laser light emitted by the laser light source from being directly emitted into eyes of a driver without passing through a diffuser film. When the closed loop is closed, the control module controls the laser light source in the head-up display to be turned on to ensure normal use of the head-up display.

The terms "first", "second", "third", "fourth", and the like (if existent) in the specification and claims of embodiments of this application and the foregoing accompanying drawings are not used to describe a specific order or sequence. It should be understood that the data used in such a way are interchangeable in appropriate circumstances, so that embodiments described herein can be implemented in an order other than the content illustrated or described herein. In addition, the term "include" or "have" and any variation thereof are intended to cover non-exclusive solutions. For example, processes, methods, apparatuses, products, or devices including a series of steps or modules are not necessarily limited to those steps or modules that are clearly listed, but may include other steps or modules that are not clearly listed or are inherent to these processes, methods, apparatuses, products, or devices.

## Claims

1. A head-up display, comprising a laser light source (10), a micro-electro-mechanical system (20), a diffuser film (30), and an apparatus for detecting a shift of the diffuser film (30), wherein
the apparatus comprises a power supply (100), a conductive module (200), and a detection module (300);
a relatively fixed position relationship exists between the conductive module (200) and the diffuser film (30);
when the diffuser film (30) is in a first position, the conductive module (200) is connected to the power supply (100) to form a closed loop;
when the diffuser film (30) is shifted from the first position to a second position, a position of the conductive module (200) changes to make the closed loop open;
a shift distance from the second position to the first position is greater than a preset distance;
the detection module (300) is configured to detect that the closed loop is opened;
the diffuser film (30) is fastened to a bearer module (400);
the conductive module (200) is connected to the bearer module (400);
the bearer module (400) comprises a first frame (4001);
the diffuser film (30) is in the first frame (4001), and the diffuser film (30) is adhered to the first frame (4001);
the conductive module (200) is fastened to the first frame (4001);
the bearer module (400) further comprises a foot (4002);
the foot (4002) is connected to the first frame (4001), and is configured to support the first frame (4001);
the conductive module (200) is disposed below the foot (4002) and connected to the foot (4002);
when the diffuser film (30) is in the first position, laser light emitted by the laser light source (10) is scanned by the micro-electro-mechanical system (20) and incident on the diffuser film (30); and
when the diffuser film (30) is in the second position, the diffuser film (30) deviates from an optical path of the laser light scanned by the micro-electro-mechanical system (20).

2. The head-up display according to claim 1, wherein the detection module (300) comprises a first resistor (R1), a second resistor (R2), a detection submodule (3001), a first connection end (Q), and a second connection end (P);
a power supply end (VCC) of the power supply (100) is connected to a first end (A) of the first resistor (R1);
a first end (C) of the second resistor (R2) is connected to a second end (B) of the first resistor (R1), and a second end (D) of the second resistor (R2) is grounded;
the first connection end (Q) is connected to the second end (B) of the first resistor (R1), and the second connection end (P) is grounded;
when the diffuser film (30) is in the first position, a first end (F) of the conductive module (200) is connected to the first connection end (Q), and a second end (E) of the conductive module (200) is connected to the second connection end (P);
when the diffuser film (30) is shifted from the first position to the second position, the first end (F) of the conductive module (200) is disconnected from the first connection end (Q), and/or the second end (E) of the conductive module (200) is disconnected from the second connection end (P); and
the detection submodule (3001) is connected to the second end (B) of the first resistor (R1), and is configured to detect a voltage of the second end (B) of the first resistor (R1), so as to determine that the closed loop is opened.

3. The head-up display according to claim 1 or 2, wherein the head-up display further comprises a control module (40); and
the control module (40) is configured to control the laser light source (10) to be turned off when it is detected that a closed loop is opened.

4. A control method for the head-up display according to any one of claims 1 to 3, comprising:
controlling (222) a laser light source (10) in the head-up display to be turned off based on detection of a closed loop being opened; and
controlling (223) the laser light source (10) in the head-up display to be turned on based on detection of the closed loop being closed.

## Patentansprüche

1. Head-up-Display, das eine Laserlichtquelle (10), ein mikroelektromechanisches System (20), eine Diffusorfolie (30) und eine Vorrichtung zum Erfassen einer Verschiebung der Diffusorfolie (30) umfasst, wobei
die Vorrichtung eine Stromversorgung (100), ein leitfähiges Modul (200) und ein Erfassungsmodul (300) umfasst;
eine relativ feste Positionsbeziehung zwischen dem leitfähigen Modul (200) und der Diffusorfolie (30) besteht;
wenn die Diffusorfolie (30) in einer ersten Position ist, das leitfähige Modul (200) mit der Stromversorgung (100) verbunden ist, um einen geschlossenen Regelkreis auszubilden;
wenn die Diffusorfolie (30) von der ersten Position in eine zweite Position verschoben wird, sich eine Position des leitfähigen Moduls (200) ändert, um den geschlossenen Regelkreis offen zu machen;
eine Verschiebungsdistanz von der zweiten Position in die erste Position größer als eine voreingestellte Distanz ist;
das Erfassungsmodul (300) konfiguriert ist, um zu erfassen, dass der geschlossene Regelkreis geöffnet ist;
die Diffusorfolie (30) an einem Trägermodul (400) befestigt ist;
das leitfähige Modul (200) mit dem Trägermodul (400) verbunden ist;
das Trägermodul (400) einen ersten Rahmen (4001) umfasst;
die Diffusorfolie (30) in dem ersten Rahmen (4001) ist und die Diffusorfolie (30) an den ersten Rahmen (4001) geklebt ist;
das leitfähige Modul (200) an dem ersten Rahmen (4001) befestigt ist;
das Trägermodul (400) ferner einen Fuß (4002) umfasst;
der Fuß (4002) mit dem ersten Rahmen (4001) verbunden ist und konfiguriert ist, um den ersten Rahmen (4001) zu halten;
das leitfähige Modul (200) unterhalb des Fußes (4002) angeordnet und mit dem Fuß (4002) verbunden ist;
wenn die Diffusorfolie (30) in der ersten Position ist, Laserlicht, das durch die Laserlichtquelle (10) emittiert wird, durch das mikroelektromechanische System (20) abgetastet wird und auf die Diffusorfolie (30) einfällt; und
wenn die Diffusorfolie (30) in der zweiten Position ist, die Diffusorfolie (30) von einem optischen Pfad des Laserlichts, das durch das mikroelektromechanische System (20) abgetastet wird, abweicht.

2. Head-up-Display nach Anspruch 1, wobei das Erfassungsmodul (300) einen ersten Widerstand (R1), einen zweiten Widerstand (R2), ein Erfassungsteilmodul (3001), ein erstes Verbindungsende (Q) und ein zweites Verbindungsende (P) umfasst;
ein Stromversorgungsende (VCC) der Stromversorgung (100) mit einem ersten Ende (A) des ersten Widerstands (R1) verbunden ist;
ein erstes Ende (C) des zweiten Widerstands (R2) mit einem zweiten Ende (B) des ersten Widerstands (R1) verbunden ist und ein zweites Ende (D) des zweiten Widerstands (R2) geerdet ist;
das erste Verbindungsende (Q) mit dem zweiten Ende (B) des ersten Widerstands (R1) verbunden ist und das zweite Verbindungsende (P) geerdet ist;
wenn die Diffusorfolie (30) in der ersten Position ist, ein erstes Ende (F) des leitfähigen Moduls (200) mit dem ersten Verbindungsende (Q) verbunden ist und ein zweites Ende (E) des leitfähigen Moduls (200) mit dem zweiten Verbindungsende (P) verbunden ist; wenn die Diffusorfolie (30) von der ersten Position in die zweite Position verschoben wird, das erste Ende (F) des leitfähigen Moduls (200) von dem ersten Verbindungsende (Q) getrennt wird und/oder das zweite Ende (E) des leitfähigen Moduls (200) von dem zweiten Verbindungsende (P) getrennt wird; und
das Erfassungsteilmodul (3001) mit dem zweiten Ende (B) des ersten Widerstands (R1) verbunden ist und konfiguriert ist, um eine Spannung des zweiten Endes (B) des ersten Widerstands (R1) zu erfassen, um zu bestimmen, dass der geschlossene Regelkreis geöffnet ist.

3. Head-up-Display nach Anspruch 1 oder 2, wobei das Head-up-Display ferner ein Steuermodul (40) umfasst; und
das Steuermodul (40) konfiguriert ist, um zu steuern, dass die Laserlichtquelle (10) ausgeschaltet wird, wenn erfasst wird, dass ein geschlossener Regelkreis geöffnet ist.

4. Steuerverfahren für das Head-up-Display nach einem der Ansprüche 1 bis 3, das umfasst: Steuern (222) einer Laserlichtquelle (10) in dem Head-up-Display, um basierend auf einer Erfassung, dass ein geschlossener Regelkreis geöffnet ist, ausgeschaltet zu werden; und Steuern (223) der Laserlichtquelle (10) in dem Head-up-Display, um basierend auf der Erfassung, dass der geschlossene Regelkreis geschlossen ist, eingeschaltet zu werden.

## Revendications

1. Affichage tête haute comprenant une source de lumière laser (10), un système microélectromécanique (20), un film diffuseur (30) et un appareil permettant de détecter un décalage du film diffuseur (30), dans lequel
l'appareil comprend une alimentation électrique (100), un module conducteur (200) et un module de détection (300) ;
une relation de position relativement fixe existe entre le module conducteur (200) et le film diffuseur (30) ;
lorsque le film diffuseur (30) se trouve dans une première position, le module conducteur (200) est connecté à l'alimentation électrique (100) pour former une boucle fermée ;
lorsque le film diffuseur (30) est décalé de la première position à une seconde position, une position du module conducteur (200) change pour ouvrir la boucle fermée ;
une distance de décalage entre la seconde position et la première position est supérieure à une distance prédéfinie ;
le module de détection (300) est configuré pour détecter l'ouverture de la boucle fermée ;
le film diffuseur (30) est fixé à un module porteur (400) ;
le module conducteur (200) est connecté au module porteur (400) ;
le module porteur (400) comprend un premier cadre (4001) ;
le film diffuseur (30) se trouve dans le premier cadre (4001), et le film diffuseur (30) est collé au premier cadre (4001) ;
le module conducteur (200) est fixé au premier cadre (4001) ;
le module porteur (400) comprend en outre un pied (4002) ;
le pied (4002) est relié au premier cadre (4001) et est conçu pour supporter le premier cadre (4001) ;
le module conducteur (200) est disposé sous le pied (4002) et relié au pied (4002) ; lorsque le film diffuseur (30) se trouve dans la première position, la lumière laser émise par la source de lumière laser (10) est balayée par le système microélectromécanique (20) et est incidente sur le film diffuseur (30) ; et lorsque le film diffuseur (30) se trouve dans la seconde position, le film diffuseur (30) s'écarte d'un chemin optique de la lumière laser balayée par le système microélectromécanique (20).

2. Affichage tête haute selon la revendication 1, dans lequel le module de détection (300) comprend une première résistance (R1), une seconde résistance (R2), un sous-module de détection (3001), une première extrémité de connexion (Q) et une seconde extrémité de connexion (P) ;
une extrémité d'alimentation électrique (VCC) de l'alimentation électrique (100) est connectée à une première extrémité (A) de la première résistance (R1) ;
une première extrémité (C) de la seconde résistance (R2) est connectée à une seconde extrémité (B) de la première résistance (R1), et une seconde extrémité (D) de la seconde résistance (R2) est mise à la terre ;
la première extrémité de connexion (Q) est connectée à la seconde extrémité (B) de la première résistance (R1), et la seconde extrémité de connexion (P) est mise à la terre ; lorsque le film diffuseur (30) se trouve dans la première position, une première extrémité (F) du module conducteur (200) est connectée à la première extrémité de connexion (Q), et une seconde extrémité (E) du module conducteur (200) est connectée à la seconde extrémité de connexion (P) ;
lorsque le film diffuseur (30) est décalé de la première position à la seconde position, la première extrémité (F) du module conducteur (200) est déconnectée de la première extrémité de connexion (Q), et/ou la seconde extrémité (E) du module conducteur (200) est déconnectée de la seconde extrémité de connexion (P) ; et le sous-module de détection (3001) est connecté à la seconde extrémité (B) de la première résistance (R1) et est configuré pour détecter une tension de la seconde extrémité (B) de la première résistance (R1), de manière à déterminer l'ouverture de la boucle fermée.

3. Affichage tête haute selon la revendication 1 ou 2, dans lequel l'affichage tête haute comprend en outre un module de commande (40) ; et
le module de commande (40) est configuré pour commander l'extinction de la source de lumière laser (10) lors de la détection de l'ouverture d'une boucle fermée.

4. Procédé de commande d'affichage tête haute selon l'une quelconque des revendications 1 à 3, comprenant :
la commande (222) de l'extinction d'une source de lumière laser (10) dans l'affichage tête haute en fonction de la détection de l'ouverture d'une boucle fermée ; et
la commande (223) de l'allumage de la source de lumière laser (10) dans l'affichage tête haute en fonction de la détection de la fermeture de la boucle fermée.
